(19) Europäisches Patentamt
European Patent Office
Office européen des brevets

(11) EP 4 742 572 A1

(12) EUROPEAN PATENT APPLICATION

(43) Date of publication:
13.05.2026 Bulletin 2026/20

(21) Application number: 25208259.9

(22) Date of filing: 13.10.2025

(51) International Patent Classification (IPC):
H04L 1/08 (2006.01)      H04L 1/1867 (2023.01)
H04L 5/00 (2006.01)

(52) Cooperative Patent Classification (CPC):
H04L 1/08; H04L 1/189; H04L 5/0053

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 08.11.2024 PCT/CN2024/131091

(71) Applicant: Nokia Technologies Oy
02610 Espoo (FI)

(72) Inventors:
• MARCONE, Alessio
  Munich (DE)
• FREDERIKSEN, Frank
  Klarup (DK)
• WU, Yuan Xing
  Hangzhou (CN)
• AZARI, Mahdi
  Massy (FR)

(74) Representative: Nokia EPO representatives
Nokia Technologies Oy
Karakaari 7
02610 Espoo (FI)

(54) **UPLINK REPETITIONS WITHIN OCC PERIOD**

(57) The present disclosure relates to devices, methods and computer readable storage medium for conditional dropping of uplink repetitions within an Orthogonal Cover Code (OCC) period. In a method, a terminal device receives, from a network apparatus, configuration information about an event associated with an operation of the terminal device. The event influences on maintaining at least one of phase continuity or power consistency within an OCC period. Then, the terminal device determines a transmission method for uplink repetitions within the OCC period and/or for the event based on a reception time of the configuration information or an occurrence time of the event.

FIG. 6A

## Description

### FIELD

Various example embodiments of the present disclosure generally relate to the field of telecommunication.

### BACKGROUND

Uplink capacity enhancements for Non-Terrestrial Network (NTN) are being studied, which aims to enhance physical uplink shared channel (PUSCH) capacity through orthogonal cover codes, allowing multiple user equipment (UEs) to share the same time-frequency resources. In OCC-enabled uplink repetitions, e.g., PUSCH repetitions, it is essential that the code is applied consistently across data symbols, i.e., that all transmitted symbols across multiple slots remain identical in their properties. This avoids a loss of OCC orthogonality and introducing interference across UEs. The study of the uplink capacity enhancements may consider orthogonal cover codes across OFDM symbols, across slots, and/or within an orthogonal frequency division multiplexing (OFDM) symbol.

### SUMMARY

In a first aspect of the present disclosure, there is provided a device. The device includes at least one processor; and at least one memory storing instructions that, when executed by the at least one processor, cause the terminal device at least to: receive, from a network apparatus, configuration information about an event associated with an operation of the terminal device, wherein the event influences on maintaining phase continuity and/or power consistency within an OCC period; and determine a transmission method for uplink repetitions within the OCC period and/or for the event based on a reception time of the configuration information or an occurrence time of the event.

In a second aspect of the present disclosure, there is provided a method. The method includes: receiving, from a network apparatus, configuration information about an event associated with an operation of the terminal device, wherein the event influences on maintaining phase continuity and/or power consistency within an OCC period; and determining a transmission method for uplink repetitions within the OCC period and/or for the event based on a reception time of the configuration information or an occurrence time of the event.

In a third aspect of the present disclosure, there is provided a first apparatus. The first apparatus includes means for receiving, from a network apparatus, configuration information about an event associated with an operation of the terminal device, wherein the event influences on maintaining phase continuity and/or power consistency within an OCC period; and means for determining a transmission method for uplink repetitions within the OCC period and/or for the event based on a reception time of the configuration information or an occurrence time of the event.

In a fourth aspect of the present disclosure, there is provided a computer readable medium. The computer readable medium includes instructions stored thereon for causing an apparatus to carry out at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:

FIG. 1 illustrates an example communication environment in which example embodiments of the present disclosure may be carried out;

FIG. 2 illustrates a schematic diagram of an example of OCC of length 2;

FIG. 3A illustrates a schematic diagram of an example of uplink repetitions;

FIG. 3B illustrates a schematic diagram of an example of Redundancy Version (RV) cycling across PUSCH repetitions;

FIG. 4 illustrates a schematic diagram of an example of locations of resources in an uplink channel;

FIG. 5 illustrates a signaling chart for a process of conditional dropping of uplink repetitions according to some example embodiments of the present disclosure;

FIG. 6A illustrates another signaling chart for a process of conditional dropping of uplink repetitions according to some example embodiments of the present disclosure;

FIG. 6B illustrates still another signaling chart for a process of conditional dropping of uplink repetitions according to some example embodiments of the present disclosure;

FIG. 7 illustrates a schematic diagram of an example of dropping uplink repetitions according to some example embodiments of the present disclosure;

FIG. 8A illustrates a schematic diagram of an example of multiplexing uplink control information in an uplink repetition according to some example embodiments of the present disclosure;

FIG. 8B illustrates a schematic diagram of an example of dropping uplink repetitions according to some example embodiments of the present disclosure;

FIG. 9 illustrates a simplified block diagram of a device that is suitable for implementing example embodiments of the present disclosure; and

FIG. 10 illustrates a block diagram of an example computer readable medium according to some example embodiments of the present disclosure.

Throughout the drawings, the same or similar reference numerals represent the same or similar element.

## DETAILED DESCRIPTION

It is to be understood that embodiments are described only for the purpose of illustration and help those skilled in the art to understand and implement the present disclosure, without suggesting any limitation as to the scope of the disclosure. Embodiments described herein may be implemented in various manners other than the ones described below.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, carrying out a step "in response to A" does not indicate that the step is carried out immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to carry out various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be carried out according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture includes a Centralized Unit (CU) and a Distributed Unit (DU) at an IAB donor node. An IAB node includes a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for carrying out a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

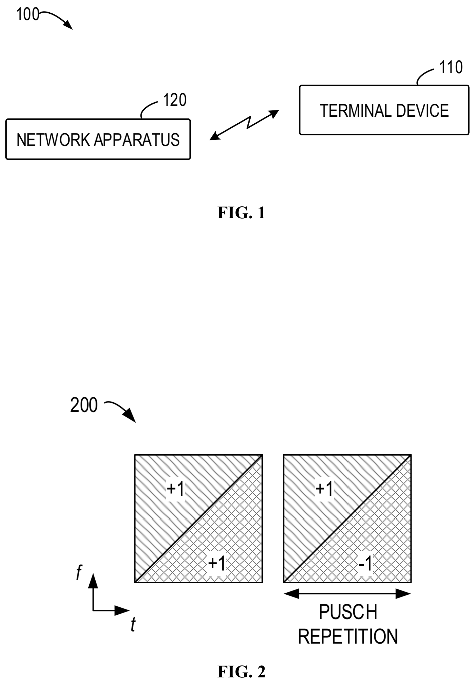

FIG. 1 illustrates an example communication environment 100 in which example embodiments of the present disclosure may be carried out. In the communication environment 100, a plurality of communication devices, including a terminal device 110 and a network apparatus 120 communicate with each other.

In the example of FIG. 1, the network apparatus 120 has a certain coverage range, which may be called as a serving area or a serving cell. The terminal device 110 is located in the cell managed by the network apparatus 120. In the communication environment 100, the network apparatus 120 may communicate with the terminal device 110. In particular, in the example of FIG. 1, the terminal device 110 may be configured with DRX configuration for communication with the network apparatus 120.

In some example embodiments, a link from the network apparatus 120 to the terminal device 110 is referred to as a downlink (DL), while a link from the terminal device 110 to the network apparatus 120 is referred to as an uplink (UL). In DL, the network apparatus 120 is a transmitting (TX) device (or a transmitter) and the terminal device 110 is a receiving (RX) device (or a receiver). In UL, the terminal device 110 is a TX device (or a transmitter) and the network apparatus 120 is an RX device (or a receiver).

It is to be understood that the number of apparatuses and their connections shown in FIG. 1 are only for the purpose of illustration without suggesting any limitation. The communication environment 100 may include any suitable number of apparatuses configured to implement example embodiments of the present disclosure.

In the following, for purpose of illustration, some example embodiments are described with the terminal device 110 operating as, e.g., a UE, and the network apparatus 120 operating as a network device, e.g., a BS or a gNB. However, in some example embodiments, operations described in connection with a terminal device may be implemented at a network device or other device, and operations described in connection with a network device may be implemented at a terminal device or other device.

Communications in the communication environment 100 may be implemented according to any proper communication protocol(s), including, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, including but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

OCC is a coding technique that may be used to enhance the capacity/throughput of a cellular network. , A set of orthogonal codes (e.g. Walsh-Hadamard codes) having ideal zero cross-correlation may be generated and different codes may be assigned to different UEs to achieve orthogonal (i.e. no interference) UL transmissions on the same time-frequency resources.

FIG. 2 illustrates a schematic diagram of an example 200 of OCC of length 2 to illustrate the principle of OCC. In the example illustrated with respect to FIG. 2, it is assumed that two UEs named UE_1 and UE_2 are transmitting 2 uplink repetitions (also referred to as PUSCH repetitions for example) in the same time-frequency resources. For the transmissions, the two UEs apply different OCCs to their transmission signal (which is assumed here to stay constant across the repetitions) allowing a gNB receiver to receive (i.e. demodulate and decode) the signals of each UE without the interference of the other UE. In mathematical form, how this works is represented in the system of equation below (without channel impairments and additive noise for simplicity of description) where x1 and x2 are the signals transmitted by UE_1 and UE_2, respectively and in both repetitions, whereas y1 and y2 are the total signals received by the gNB in the first and second repetition, respectively.

In this example, UE_1 may apply the OCC [1, 1] whereas UE_2 may apply the OCC [1, -1]. In the example of the following equation (1), gNB may retrieve the signal of UE_2 without interference from UE_1 by cross correlating the two received signal y1 and y2 with the OCC used by UE_2 (i.e. [1, -1]). In a similar way, the corresponding operation with cross-correlating with the OCC used by UE_1 ([1, 1]) may be carried out and the receiver algorithm would end up with $2*x_1$.

$$\begin{cases} y_1 = (+1) * x_1 + (+1) * x_2 \\ y_2 = (+1) * x_1 + (-1) * x_2 \end{cases} \to (+1) * y_1 + (-1) * y_2 = 2 * x_2 \qquad (1)$$

The above example is only illustrative and uses Walsh-Hadamard orthogonal codes as the OCC set. It is to be understood that different sequences may be used to realize orthogonality among UEs without impacting the applicability of this disclosure. In addition, it is to be understood that in general in order to multiplex a plurality of UEs (e.g., $N$ UEs), a number of at least $N$ PUSCH (or signal) repetitions may be used.

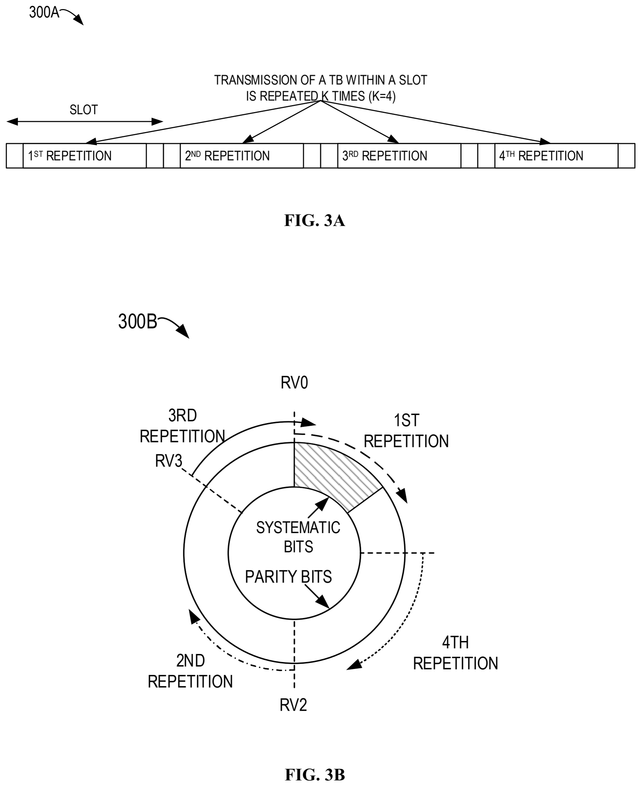

In addition, studies have been made on PUSCH repetition and Redundancy Version (RV) cycling across PUSCH repetitions. FIG. 3A illustrates a schematic diagram of an example 300A of PUSCH repetitions.

In Rel-15/16, a Transport Block (TB) is transmitted per slot, i.e., resource allocation for a single PUSCH transmission is limited within a slot. Therefore, a feature called PUSCH aggregation, which was later renamed as PUSCH repetition type A to avoid confusion with PUSCH repetition type B feature introduced in Rel-16 for ultra-reliable low latency applications, was first specified in Rel-15 and further enhanced in Rel-16/17. PUSCH repetition type A allows repeating the transmission of a TB within a slot multiple times across K slots. As shown in FIG. 3, a transmission of a TB within a slot is repeated K times (e.g., K=4).

The transport block size (TBS) of PUSCH repetition type A may be determined based on the resource within a slot. For PUSCH resource in each slot of the K slots, the same starting symbol (S) and length (L) may be applied. In Rel-15, these K slots are counted on consecutive physical slots (i.e., including downlink or special slots) with K is RRC configured. Rel-16 allows dynamic indication of K, while Rel-17 further introduces the counting of K on available slots, i.e., only the slots that are available (no collision with DL or SSB symbols) and valid (in terms of S & L) for PUSCH transmission will be counted. Redundancy version (RV) may be cycled across the K slots following a RV sequence.

FIG. 3B illustrates a schematic diagram of an example 300B of RV cycling across PUSCH repetitions. More specifically, FIG. 3B shows a bit selection from circular buffer for PUSCH repetition type A with RV cycling and RV sequence [0 2 3 1]. From FIG. 3B (i.e. circular buffer), it may be noticed that the bits transmitted in the repetitions are different, making the application of the OCC across repetitions not possible.

Additionally, a UE is normally configured to transmit uplink control information (UCI) on the physical uplink control channel (PUCCH). The uplink control information may contain various information, such as, channel state information (CSI), scheduling requests (SR) and hybrid automatic repeat request-acknowledgement (HARQ-ACK) information. As part of the normal data transmission, the UE's payload would be transmitted on the PUSCH, which would normally be transmitted in either a full slot or during a fraction of a slot. In some example embodiments of the present disclosure, for the normal expected use case where the UE is in coverage shortage, it is assumed that the UE may transmit during a full slot for being able to utilize OCC on top of the PUSCH transmissions.

When a UE is having both PUCCH and PUSCH expected to be transmitted in the same slot (or more generically in overlapping time resources), the UE may "make room" in the normal PUSCH resources to be able to transmit the PUCCH along with the PUSCH transmission.

Specifically, if a UE transmits a PUSCH over one or more slots or multiple PUSCHs over one or more slots that are scheduled by a DCI format, and the UE may transmit a PUCCH with HARQ-ACK and/or CSI information over a single slot that overlaps with the PUSCH transmission in the one or more slots, and the PUSCH transmission in the one or more slots fulfills the conditions in clause 9.2.5 (TS 38.213, section 9) for multiplexing the HARQ-ACK and/or CSI information, the UE may multiplex the HARQ-ACK and/or CSI information in the PUSCH transmission in the one or more slots. The UE may not multiplex HARQ-ACK and/or CSI information in the PUSCH transmission in a slot from the one or more slots if the UE would not transmit a single-slot PUCCH with HARQ-ACK and/or CSI information in the slot in case the PUSCH transmission was absent.

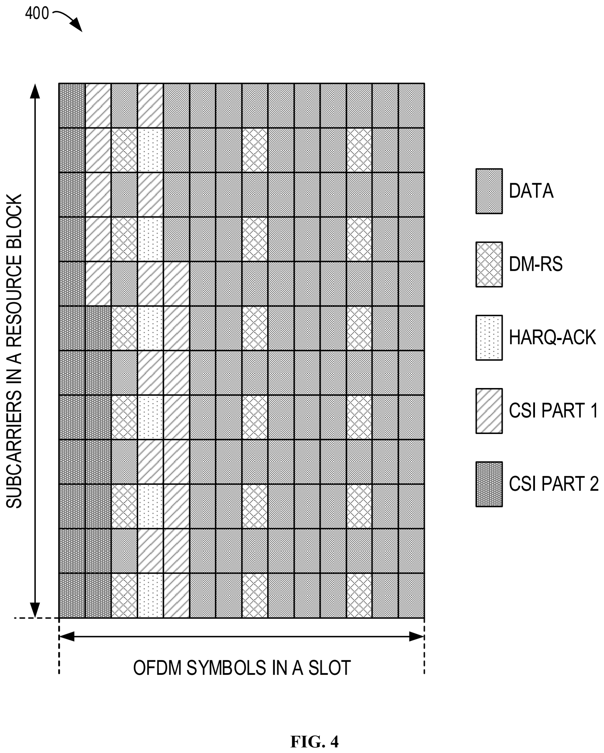

An illustration of the principle of carrying out simultaneous transmission of PUCCH and PUSCH within the same slot is shown in FIG. 4, which illustrates a schematic diagram of an example 400 of multiple locations of resources in an uplink channel. In FIG, 4, it is illustrated a plurality of OFDM symbols in one slot and a plurality of subcarriers in a resource block. As shown, HARQ-ACK, CSI information (e.g., CSI part 1 and CSI part 2), demodulation reference signal (DM-RS), and data are allocated corresponding resources, respectively.

It is to be understood that UCI multiplexing in PUSCH may occur at the bit level, and the UCI codeword(s) and UL-SCH codeword may be concatenated to form a single codeword to transmit on the PUSCH.

Applying OCC to PUSCH repetitions requires that the code is applied across data symbols (or data elements) that share the same physical properties. In the case of carrying out OCC across multiple slots, where each entry of the cover code is applied to separate slots, it is essential that all transmitted symbols in those slots remain identical in their properties. Any variation may break the OCC orthogonality and introduce interference.

An issue arises when an event of UCI multiplexing occurs within an OCC-based PUSCH transmission with repetitions. If such events are multiplexed only in a subset of PUSCH repetitions, this disrupts the uniformity required by OCC, leading to a loss of orthogonality and potential interference to other UEs or to itself. Handling such events within an OCC period is problematic.

In addition, there are several events in addition to the UCI multiplexing which may disrupt the uniformity required by OCC by interrupting the power consistency and/or phase continuity across PUSCH repetitions. In order for the signal to be uniform across repetitions with OCC, not only the transmitted signal across the repetitions needs to be the same but also the channel through which the signal passes needs to be the same. By maintaining phase continuity and power consistency across repetitions, a UE ensures that the channel affecting the signal is the same across the repetitions. Events occurring within repetitions do not allow UE to maintain power consistency and phase continuity, affecting the orthogonality required for the OCC scheme to perform as expected.

To solve the above and other potential issues, the present disclosure proposes solutions for conditional dropping of PUSCH transmissions within an OCC period based on UE knowledge of upcoming events and/or based on the time when an event occurs. Specifically, a UE receives configuration information about an event which influences on maintaining phase continuity and/or power consistency within an OCC period, and determines whether to drop or transmit uplink repetitions within the OCC period based on a reception time of the configuration information or an occurrence time of the event. Alternatively or additionally, the present disclosure proposes solutions for conditional handling of events occurring within an OCC period. In this way, capacity and throughput enhancements via OCC may be achieved.

Some examples of the present disclosure will be described in detail below.

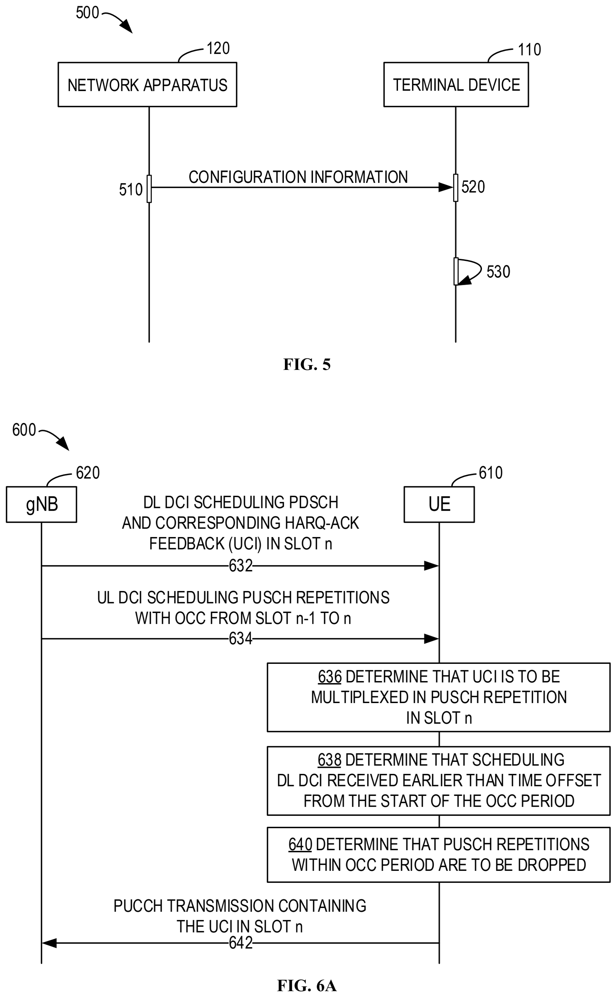

FIG. 5 illustrates a signaling chart for a process 500 of conditional dropping of uplink repetitions according to some example embodiments of the present disclosure. For the purposes of discussion, the signaling chart for the process 500 will be discussed by using the terminal device 110 and the network apparatus 120. In some example embodiments, the terminal device 110 may be discussed with a UE, and the network apparatus 120 may be discussed with a network device, e.g., a gNB.

In the process 500, the network apparatus 120 transmits (510) configuration information about an event associated with an operation of the terminal device to the terminal device 110. The event influences on maintaining phase continuity and/or power consistency within an OCC period.

As an example, the configuration information may be transmitted from the network apparatus 120 via a radio resource control (RRC) configuration, a dynamic configuration (e.g., a scheduling configuration), or other suitable message or information. In other words, the configuration information may be included in the RRC configuration, the scheduling configuration, or the like.

The OCC period may contain a plurality of time units, e.g., slots. The event may occur in any slot of the OCC period. In other words, the event may occur in one of the plurality of slots in the OCC period. The time when the event occurs is also referred to as an occurrence time of the event. The occurrence time of the event may correspond to or may be within one slot in the OCC period, as well as the uplink repetition to be transmitted in this slot.

The event may be of various types, which may be predefined or predetermined, or may be defined in a variety of ways. As an example, an event may indicate that uplink control information is to be transmitted in one of slots in the OCC period, in between two PUSCH repetitions. In another example, an event may indicate hybrid automatic repeat request (HARQ) feedback is to be carried out in one of slots in the OCC period, multiplexed with the PUSCH repetition in the slot of the OCC period. In yet another example, an event may indicate dropping or cancellation of an uplink repetition of the OCC period. In addition, an event may indicate uplink timing adjustment in response to a timing advance command, or may indicate frequency hopping.

It is to be understood that the above examples for the event are just discussed for illustration, rather than suggesting any limitations. The example embodiments of the present disclosure are not limited in this regard.

The terminal device 110 receives (520) the configuration information from the network apparatus 120. Thus, the terminal device 110 may have the knowledge of one or more events that may not allow a UE to maintain phase continuity and/or power consistency within the OCC period. Based on a reception time of the configuration information or an occurrence time of the event, the terminal device 110 determines (530) a transmission method for uplink repetitions within the OCC period and/or for the event.

It is to be understood that the transmission method indicates whether the uplink repetitions are to be transmitted or dropped, or how the uplink repetitions are to be transmitted, or which uplink repetitions are to be dropped, and so on. It is also to be noted that the term "transmission method" does not suggest that the uplink repetitions must be transmitted. In some examples, it is possible that the transmission method indicates that the uplink repetitions are not to be transmitted, but dropped. In 530, the terminal device 110 may first determine a time offset from a start of the OCC period, and then determine the transmission method for the uplink repetitions based on the reception time and the time offset. The time offset may be predefined or preconfigured. For example, the time offset may be configured by the network apparatus 120 via a RRC message. In another example, the time offset may be hard coded in the specifications.

The time offset may be defined in various ways or forms. In some examples, the time offset may be in units of OFDM symbols, slots or milliseconds, and/or the like. As an example, the time offset may have any suitable values, including a value of 0. In such case, the time offset may be 0 OFDM symbol, 0 slot, or 0 ms. As another example, the time offset may have a value equal to the minimum scheduling delay for a scheduled event, e.g. HARQ-ACK feedback. It is to be understood that the above examples for the time offset are just discussed for illustration, rather than suggesting any limitations.

In some examples, the terminal device 110 may compare the reception time of the configuration information with the time offset. If the reception time is earlier than the time offset from the start of a first repetition in an OCC period or from the start of the OCC period, the terminal device 110 may determine to drop the uplink repetitions, e.g., all the uplink repetitions within the OCC period. Additionally, the terminal device 110 may carry out the operation associated with the event based on the configuration information. In some cases where the event indicates uplink control information is to be transmitted in at least one slot of the OCC period, the terminal device 110 may transmit, to the network apparatus 120, the uplink control information in at least one slot of the OCC period. Alternatively, the terminal device 110 may repeat/replicate the event in all the slots of the OCC period, if the reception time is earlier than the time offset from the start of a first repetition in an OCC period or from the start of the OCC period. For example, if the event is a UCI multiplexing in a PUSCH repetition of the OCC period and the reception time of the configuration information is earlier than the time offset from the start of a first repetition in an OCC period or from the start of the OCC period, the terminal device 110 multiplexes UCI in all the uplink repetitions within the OCC period.

On the other hand, if the reception time is later than the time offset from the start of a first repetition in an OCC period or from the start of the OCC period, the terminal device 110 may treat the event. In this case, the terminal device 110 may carry out the operation associated with the event regardless of the transmission of the uplink repetitions within the OCC period. Alternatively, the terminal device 110 may ignore the event, that is, drop the event. As a further alternative, the terminal device 110 may delay or postpone the operation associated with the event to take place after an end of the OCC period. In other words, the terminal device 110 may postpone the event to a time point after the end of the OCC period.

As an alternative to the above, the transmission method may be determined (530) based on the occurrence time of the event. In some example implementations, the occurrence time of the event may be determined based on the configuration information. For example, the terminal device 110 may obtain the occurrence time of the event from the received configuration information. If the terminal device 110 determines that the occurrence time of the event is earlier than a start or earlier than a time offset from a start of at least one uplink repetition among the uplink repetitions within the OCC period, the terminal device 110 may determine to drop the at least one uplink repetition. As such, all uplink repetitions after the event occurs may be dropped.

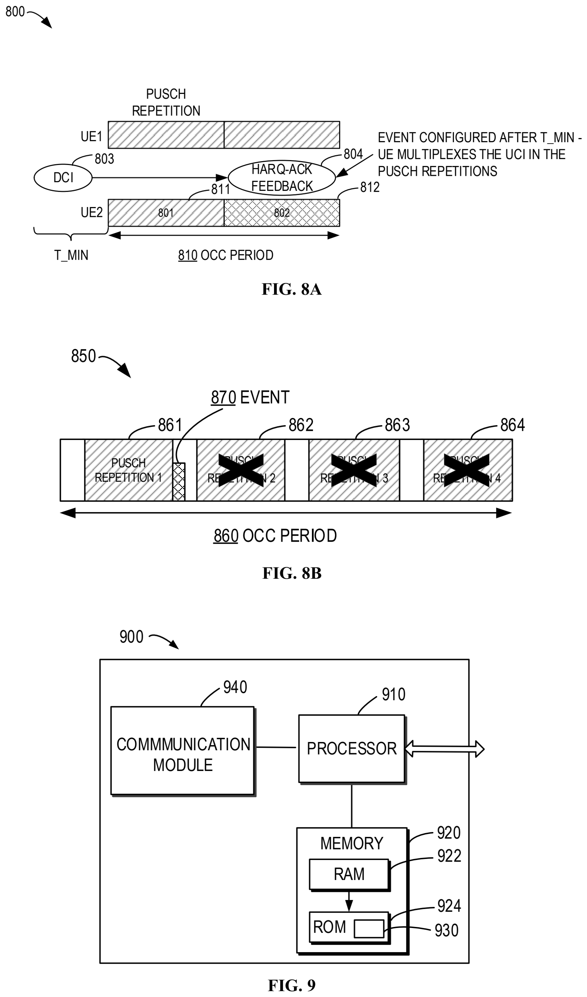

FIG. 8B illustrates a schematic diagram of an example of dropping uplink repetitions according to some example embodiments of the present disclosure. In the example of FIG. 8B, an OCC of length 4 is applied, i.e., an OCC period 860 contains 4 repetitions, numbered from 1 to 4, which are indicated by 861, 862, 863 and 864, respectively. An event 870 (e.g., UCI to be transmitted on PUCCH) occurs earlier than the start of repetitions 2, 3 and 4 (i.e. the event 870 occurs before repetition 2, it thus is early enough for repetition 2, 3 and 4), but it is later than the start of repetition 1. In fact, it occurs at the end of repetition 1, 861. In such a case, the terminal device 110 may drop (i.e. not transmit) repetitions 2, 3 and 4.

In this way, the terminal device 110 may drop OCC-enabled uplink repetitions, and therefore decrease its throughput, only when these OCC-enabled PUSCH repetitions may create interference to other UEs. As such, the interference in the communication network may be reduced.

FIG. 6A illustrates another signaling chart for a process 600 of conditional dropping of uplink repetitions according to some example embodiments of the present disclosure. The process 600 involves a UE 610 and a gNB 620. The UE 610 may be considered as an implementation of the terminal device 110, and the gNB 620 may be considered as an implementation of the network apparatus 120.

In the process 600, for example, it is assumed that the UE 610 may be scheduled with 2 PUSCH repetitions and inter-slot OCC of size 2. That is, OCC may be applied across the two scheduled repetitions and an OCC period spans the two scheduled repetitions. As an example, in this case, the OCC period may include two slots, namely slot n-1 and slot n.

At 632, the UE 610 may detect a DL DCI scheduling PDSCH and corresponding UCI (e.g., HARQ-ACK feedback or other suitable uplink control information) in slot n.

At 634, the UE 610 may detect an UL DCI scheduling PUSCH repetitions with OCC in slot n-1 and n.

At 636, the UE 610 may determine that UCI is to be multiplexed in the PUSCH repetition in slot n, belonging to the OCC period.

Concurrently, the UE 610 may determine that the UE 610 will be applying OCC in slot n. Therefore, the multiplexing may represent an event that would not allow the UE 610 to maintain phase continuity and/or power consistency within the OCC period.

At 638, the UE 610 may determine the time of the DL DCI, and determine that it was received earlier than a time offset from the start of the OCC period.

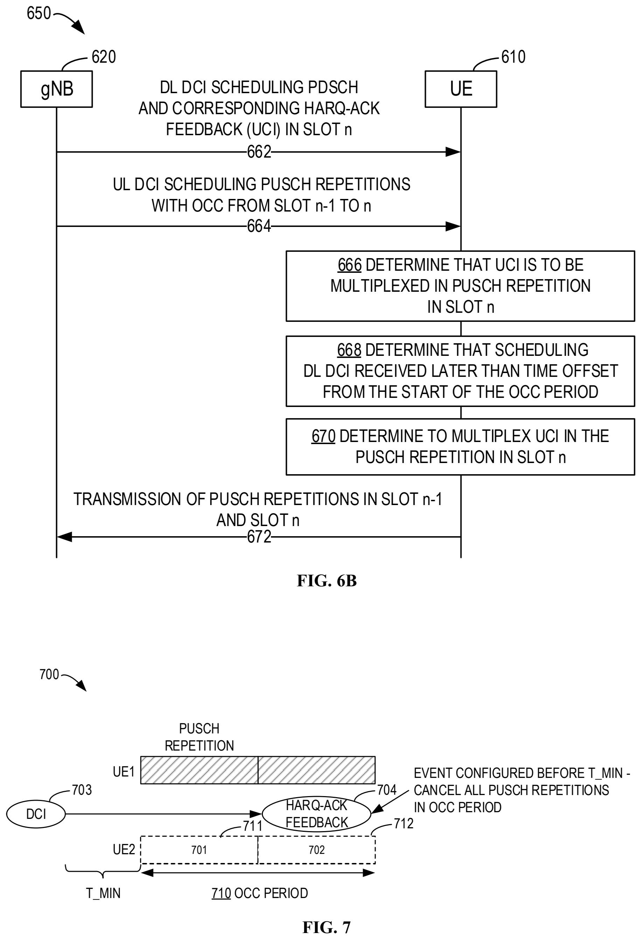

This example may be aligned to the example shown with respect to FIG. 7 in terms of timelines, which will be discussed in detail below.

The time offset may have also a value of 0 in some implementations. The time offset may have also a value equal to a minimum scheduling delay in some implementations. That is the reference point for the determination may be the start of the OCC period when the event would occur.

At 640, based on determination at 638, the UE 610 may determine to drop PUSCH repetitions within the OCC period where the event occurs.

In this example, since OCC size is 2 (i.e. the OCC period spans slots n-1 and n) and the event (UCI multiplexing) occurs in slot n, the UE 610 may drop the PUSCH repetitions in slots n-1 and n.

At 642, the UE 610 may not transmit the PUSCH repetitions in slots n-1 and n and may just transmit PUCCH with UCI in slot n.

Alternatively, in some other examples, the UE 610 may determine, at 638, the DL DCI, was received earlier than a time offset from the start of the OCC period, and it may not determine to drop the PUSCH repetitions within the OCC period at 640. Instead, the UE 610 may multiplex the UCI in all PUSCH repetitions in both slots n and n-1.

FIG. 6B illustrates a signaling chart for a process 650 of conditional dropping of uplink repetitions according to some example embodiments of the present disclosure. The process 650 also involves a UE 610 and a gNB 620. The UE 610 may be considered as an implementation of the terminal device 110, and the gNB 620 may be considered as an implementation of the network apparatus 120.

In the process 650, for example, it is assumed that the UE 610 may be scheduled with 2 PUSCH repetitions and inter-slot OCC of size 2. That is, OCC may be applied across the two scheduled repetitions and an OCC period spans the two scheduled repetitions. As an example, in this case, the OCC period may include two slots, namely slot n-1 and slot n.

At 662, the UE 610 may detect a DL DCI scheduling PDSCH and corresponding UCI (e.g., HARQ-ACK feedback or other suitable uplink control information) in slot n.

At 664, the UE 610 may detect an UL DCI scheduling PUSCH repetitions with OCC in slot n-1 and n.

At 666, the UE 610 may determine that UCI is to be multiplexed in the PUSCH repetition in slot n, belonging to the OCC period.

Concurrently, the UE 610 may determine that the UE 610 will be applying OCC in slot n. Therefore, the multiplexing may represent an event that would not allow the UE 610 to maintain phase continuity and/or power consistency within the OCC period.

At 668, the UE 610 may determine that the DCI was received later than the time offset from the start of the OCC period.

This example may be aligned to the example shown with respect to FIG. 8A in terms of timelines, which will be discussed in detail below.

At 670, based on determination at 668, the UE 610 may determine to multiplex the UCI in the uplink repetition in slot n.

At 672, the UE 610 may transmit PUSCH repetitions in slots n-1 and n, wherein the repetition in slot n contains the multiplexed UCI.

FIG. 7 illustrates a schematic diagram of an example 700 of dropping uplink repetitions according to some example embodiments of the present disclosure. As shown FIG. 7, two UEs named UE1 and UE2 are illustrated and both of them are carrying out uplink transmissions, e.g., a transmission of PUSCH repetitions.

In the example shown with respect to FIG. 7, it is assumed that the UE2 is configured with the event (UCI multiplexing in this case) earlier than a time offset (e.g., denoted as T_min) before the start of an OCC period 710. In this case, the UE2 may drop the PUSCH repetitions 701 and 702 within the OCC period 710. The OCC period 710 may include two slots, i.e., a first slot 711 and a second slot 712.

FIG. 7 shows an example implementation of the present disclosure, where a scheduling DL DCI 703 schedules HARQ-ACK feedback 704 in the second slot of the OCC period. The DL DCI 703 also schedules a PDSCH and related HARQ-ACK feedback.

Since the scheduling DCI 703 is received earlier than the time offset (T_min) before the start of the OCC period 710, the UE2 may drop all the PUSCH repetitions 701 and 702 within the OCC period 710, and may transmit the HARQ-ACK 704 in the scheduled PUCCH. If the PUCCH is scheduled in different frequency resources than the PUSCH (as expected), there is no impact nor interference to UE1.

It is to be understood that HARQ-ACK 704 is one example of such an event. In a similar manner, the aperiodic CSI being requested through a DCI or any other event as for example the ones defined for DMRS bundling may be considered as well, without loss of general applicability of the present disclosure.

FIG. 8A illustrates a schematic diagram of an example 800 of multiplexing uplink control information in an uplink repetition according to some example embodiments of the present disclosure. As shown FIG. 8A, two UEs named UE1 and UE2 are illustrated and both of them carry out uplink transmissions, e.g., a transmission of PUSCH repetitions. The OCC period 810 may include two slots, i.e., a first slot 811 and a second slot 812. PUSCH repetitions 801 and 802 may correspond to the first slot 811 and a second slot 812, respectively.

In the example shown with respect to FIG. 8A, the UE2 may multiplex UCI in the second PUSCH repetition 802 within an OCC period 810 in case the UE2 is configured with the event (UCI multiplexing in this case) not earlier than the time offset (denoted as T_min) before the start of the OCC period 810.

FIG. 8A shows an example implementation of the present disclosure, where a scheduling DL DCI 803 (i.e. scheduling a PDSCH and related HARQ-ACK feedback) schedules the HARQ-ACK feedback 804 in the second slot 812 of the OCC period 810.

Different from FIG. 7, the scheduling DCI 803 may not be received earlier than the time offset (T_min) before the start of the OCC period 810. Therefore, in this case, the UE2 may multiplex the HARQ-ACK feedback in the second repetition of the PUSCH (i.e. legacy behavior). In this case, the interference caused by the UE2 to the UE1 may not be fully cancelled, since the event is not known to UE2 well in time before the start of the OCC period 810. Therefore, the UE2 may not be able to drop all the PUSCH repetitions 801 and 802 within the OCC period 810.

It is to be understood that FIG. 7 and FIG. 8A just show example implementations of the present disclosure, rather than suggest any limitations. The scope of the present disclosure is not limited to these two examples.

In some example embodiments, a first apparatus capable of carrying out any of the method carried out by the terminal device 110 in FIG. 1 may include means for carrying out the respective operations of the method. The means may be implemented in any suitable form. For example, the means may be implemented in a circuitry or software module. The first apparatus may be implemented as or included in the terminal device 110 in FIG. 1.

In some example embodiments, the first apparatus may include means for receiving, from a network apparatus, configuration information about an event associated with an operation of the terminal device, wherein the event influences on maintaining phase continuity and/or power consistency within an OCC period; and means for determining a transmission method for uplink repetitions within the OCC period and/or for the event based on a reception time of the configuration information or an occurrence time of the event.

In some example embodiments, the first apparatus may include: means for determining a time offset from a start of the OCC period, wherein the time offset is predefined or preconfigured; and means for determining the transmission method for the uplink repetitions based on the reception time and the time offset.

In some example embodiments, the first apparatus may include: means for in accordance with a determination that the reception time is earlier than the time offset, determining to drop the uplink repetitions within the OCC period.

In some example embodiments, the first apparatus may include: means for carrying out the operation associated with the event based on the configuration information.

In some example embodiments, the event may indicate uplink control information is to be transmitted in at least one slot of the OCC period, and the first apparatus may include: means for transmitting, to the network apparatus, the uplink control information in at least one slot of the OCC period.

In some example embodiments, the first apparatus may include: in accordance with a determination that the reception time is later than the time offset, means for determining to transmit the uplink repetitions; and means for carrying out at least one of: the operation associated with the event regardless of the transmission of the uplink repetitions within the OCC period, ignoring the event, or delaying the operation associated with the event to take place after an end of the OCC period.

In some example embodiments, the time offset may be defined in units of orthogonal frequency division multiplexing, OFDM, symbols, slots or milliseconds.

In some example embodiments, the first apparatus may include: means for determining the occurrence time of the event based on the configuration information; and means for in accordance with a determination that the occurrence time of the event is earlier than a start of at least one uplink repetition in the uplink repetitions within the OCC period, determining to drop the at least one uplink repetition.

In some example embodiments, the configuration information about the event may be included in a RRC configuration or a scheduling configuration.

In some example embodiments, the OCC period may include a plurality of slots, and wherein the event may occur in one of the plurality of slots in the OCC period.

In some example embodiments, the event may indicate uplink control information is to be transmitted in one of slots in the OCC period, HARQ feedback is to be carried out in one of slots in the OCC period, a dropping or cancellation of an uplink transmission, uplink timing adjustment in response to a timing advance command, and/or frequency hopping.

In some example embodiments, the first apparatus may include means for carrying out other operations in some example embodiments of the method carried out by the terminal device 110 or the terminal device 110. In some example embodiments, the means includes at least one processor; and at least one memory storing instructions that, when executed by the at least one processor, cause the performance of the first apparatus.

FIG. 9 is a simplified block diagram of a device 900 that is suitable for implementing example embodiments of the present disclosure. The device 900 may be provided to implement a communication device, for example, the terminal device 110 or the network apparatus 120 as shown in FIG. 1. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The instructions of the program 930 may include instructions for carrying out operations/acts of some example embodiments of the present disclosure. The program 930 may be stored in the memory, e.g., the ROM 924. The processor 910 may carry out any suitable actions and processing by loading the program 930 into the RAM 922.

The example embodiments of the present disclosure may be implemented by means of the program 930 so that the device 900 may carry out any process of the disclosure as discussed with reference to FIG. 5 to FIG. 8. The example embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

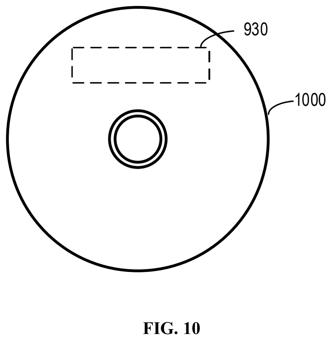

FIG. 10 shows an example of the computer readable medium 1000 which may be in the form of CD, DVD or other optical storage disk. The computer readable medium 1000 has the program 930 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that carry out particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to carry out various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be carried out in the particular order shown or in sequential order, or that all illustrated operations be carried out, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A terminal device comprising:

   means for receiving, from a network apparatus, configuration information about an event associated with an operation of the terminal device, wherein the event influences on maintaining at least one of phase continuity or power consistency within an Orthogonal Cover Code, OCC, period; and
   means for determining a transmission method for uplink repetitions within the OCC period and/or for the event based on a reception time of the configuration information or an occurrence time of the event.

2. The terminal device of claim 1, wherein the terminal device further comprises:

   means for determining a time offset from a start of the OCC period, wherein the time offset is predefined or preconfigured; and
   means for determining the transmission method for the uplink repetitions based on the reception time and the time offset.

3. The terminal device of claim 2, wherein the terminal device further comprises means for :
   in accordance with a determination that the reception time is earlier than the time offset, determining to drop the uplink repetitions within the OCC period.

4. The terminal device of claim 3, wherein the terminal device further comprises :
   means for carring out the operation associated with the event based on the configuration information.

5. The terminal device of claim 3, wherein the event indicates uplink control information is to be transmitted in at least one slot of the OCC period, and the terminal device is caused to:
   transmit, to the network apparatus, the uplink control information in at least one slot of the OCC period.

6. The terminal device of claim 2, wherein the terminal device further comprises means for :

   in accordance with a determination that the reception time is later than the time offset,
   determining to transmit the uplink repetitions; and
   carrying out at least one of:

      the operation associated with the event regardless of the transmission of the uplink repetitions within the OCC period,
      ignoring the event, or
      delaying the operation associated with the event to take place after an end of the OCC period.

7. The terminal device of any of claims 2 to 6, wherein the time offset is defined in units of orthogonal frequency division multiplexing, OFDM, symbols, slots or milliseconds.

8. The terminal device of claim 1, wherein the terminal device further comprises means for :

   determining the occurrence time of the event based on the configuration information; and
   in accordance with a determination that the occurrence time of the event is earlier than a start of at least one uplink repetition in the uplink repetitions within the OCC period, determining to drop the at least one uplink repetition.

9. The terminal device of any of claims 1 to 8, wherein the configuration information about the event is comprised in a radio resource control, RRC, configuration or a scheduling configuration.

10. The terminal device of any of claims 1 to 9, wherein the OCC period comprises a plurality of slots, and wherein the event occurs in one of the plurality of slots in the OCC period.

11. The terminal device of any of claims 1 to 10, wherein the event indicates at least one of:

uplink control information is to be transmitted in one of slots in the OCC period,
hybrid automatic repeat request, HARQ, feedback is to be carried out in one of slots in the OCC period,
a dropping or cancellation of an uplink transmission,
uplink timing adjustment in response to a timing advance command, or
frequency hopping.

12. A method comprising:

receiving, from a network apparatus, configuration information about an event associated with an operation of the terminal device, wherein the event influences on maintaining at least one of phase continuity or power consistency within an Orthogonal Cover Code, OCC, period; and
determining a transmission method for uplink repetitions within the OCC period and/or for the event based on a reception time of the configuration information or an occurrence time of the event.

13. The method of claim 12, further comprising:

determining a time offset from a start of the OCC period, wherein the time offset is predefined or preconfigured; and
determining the transmission method for the uplink repetitions based on the reception time and the time offset.

14. The method of claim 12, further comprising:

determining the occurrence time of the event based on the configuration information; and
in accordance with a determination that the occurrence time of the event is earlier than a start of at least one uplink repetition in the uplink repetitions within the OCC period, determining to drop the at least one uplink repetition.

15. The method of any of claims 12 to 14, wherein the configuration information about the event is comprised in a radio resource control, RRC, configuration or a scheduling configuration.

16. The method of any of claims 12 to 15, wherein the event indicates at least one of:

uplink control information is to be transmitted in one of slots in the OCC period,
hybrid automatic repeat request, HARQ, feedback is to be carried out in one of slots in the OCC period,
a dropping or cancellation of an uplink transmission,
uplink timing adjustment in response to a timing advance command, or
frequency hopping.

EP 4 742 572 A1

FIG. 1

FIG. 2

300A

TRANSMISSION OF A TB WITHIN A SLOT
IS REPEATED K TIMES (K=4)

SLOT

| 1ST REPETITION | | 2ND REPETITION | | 3RD REPETITION | | 4TH REPETITION | |

**FIG. 3A**

300B

RV0

3RD REPETITION

RV3

1ST REPETITION

SYSTEMATIC BITS

PARITY BITS

2ND REPETITION

4TH REPETITION

RV2

**FIG. 3B**

400

SUBCARRIERS IN A RESOURCE BLOCK

OFDM SYMBOLS IN A SLOT

DATA

DM-RS

HARQ-ACK

CSI PART 1

CSI PART 2

**FIG. 4**

500

120
NETWORK APPARATUS

110
TERMINAL DEVICE

510

CONFIGURATION INFORMATION

520

530

**FIG. 5**

600

620
gNB

610
UE

DL DCI SCHEDULING PDSCH
AND CORRESPONDING HARQ-ACK
FEEDBACK (UCI) IN SLOT n

632

UL DCI SCHEDULING PUSCH REPETITIONS
WITH OCC FROM SLOT n-1 TO n

634

636 DETERMINE THAT UCI IS TO BE
MULTIPLEXED IN PUSCH REPETITION
IN SLOT n

638 DETERMINE THAT SCHEDULING
DL DCI RECEIVED EARLIER THAN TIME OFFSET
FROM THE START OF THE OCC PERIOD

640 DETERMINE THAT PUSCH REPETITIONS
WITHIN OCC PERIOD ARE TO BE DROPPED

PUCCH TRANSMISSION CONTAINING
THE UCI IN SLOT n

642

**FIG. 6A**

650 —↘

620 ─

| gNB |

DL DCI SCHEDULING PDSCH
AND CORRESPONDING HARQ-ACK
FEEDBACK (UCI) IN SLOT n
——————662——————→

610 ─

| UE |

UL DCI SCHEDULING PUSCH REPETITIONS
WITH OCC FROM SLOT n-1 TO n
——————664——————→

666 DETERMINE THAT UCI IS TO BE
MULTIPLEXED IN PUSCH REPETITION
IN SLOT n

668 DETERMINE THAT SCHEDULING
DL DCI RECEIVED LATER THAN TIME OFFSET
FROM THE START OF THE OCC PERIOD

670 DETERMINE TO MULTIPLEX UCI IN THE
PUSCH REPETITION IN SLOT n

TRANSMISSION OF PUSCH REPETITIONS IN SLOT n-1
AND SLOT n
←——————672——————

**FIG. 6B**

700 —↘

PUSCH
REPETITION

UE1

703

DCI

704 EVENT CONFIGURED BEFORE T_MIN -
CANCEL ALL PUSCH REPETITIONS
IN OCC PERIOD

HARQ-ACK
FEEDBACK

711                    712

UE2        701              702

T_MIN        710 OCC PERIOD

**FIG. 7**

800

PUSCH
REPETITION

UE1

803
DCI

811

UE2 801 802

T_MIN

810 OCC PERIOD

804
HARQ-ACK
FEEDBACK

812

EVENT CONFIGURED AFTER T_MIN -
UE MULTIPLEXES THE UCI IN THE
PUSCH REPETITIONS

**FIG. 8A**

850

870 EVENT

861 862 863 864

PUSCH
REPETITION 1

PUSCH
REPETITION 2

PUSCH
REPETITION 3

PUSCH
REPETITION 4

860 OCC PERIOD

**FIG. 8B**

900

940
COMMMUNICATION
MODULE

910
PROCESSOR

920
MEMORY

922
RAM

924
ROM

930

**FIG. 9**

**FIG. 10**

| | Europäisches Patentamt European Patent Office Office européen des brevets | **EUROPEAN SEARCH REPORT** | **Application Number** EP 25 20 8259 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/064745 A1 (SHIM JAENAM [KR] ET AL) 22 February 2024 (2024-02-22) * abstract; figures 12, 13 * * paragraph [0005] - paragraph [0006] * * paragraph [0082] - paragraph [0093] * * paragraph [0123] - paragraph [0158] * * paragraph [0197] - paragraph [0204] * * paragraph [0209] - paragraph [0230] * * paragraph [0242] * ----- | 1-16 | INV. H04L1/08 H04L1/1867 H04L5/00 |
| X | US 2023/254091 A1 (ELSHAFIE AHMED [US] ET AL) 10 August 2023 (2023-08-10) * abstract * * paragraph [0005] - paragraph [0008] * * paragraph [0033] - paragraph [0034] * * paragraph [0038] * * paragraph [0055] - paragraph [0057] * * paragraph [0061] * * paragraph [0075] - paragraph [0079] * * paragraph [0083] - paragraph [0089] * ----- | 1,9-12, 15,16 | |
| A | KOICHIRO KITAGAWA ET AL: "Discussion on uplink capacity/cell throughput enhancement for FR1-NTN", 3GPP DRAFT; R1-2408505; TYPE DISCUSSION; NR_NTN_PH3-CORE 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Hefei, CN; 20241014 - 20241018, 4 October 2024 (2024-10-04), XP052655761, [retrieved on 2024-10-04] * the whole document * ----- -/-- | 1-16 | TECHNICAL FIELDS SEARCHED (IPC) H04L |

The present search report has been drawn up for all claims

| Place of search | Date of completion of the search | Examiner |
|---|---|---|
| The Hague | 26 March 2026 | Beker, Sergio |

EPO FORM 1503 03.82 (P04C01)

**page 1 of 2**

| | Europäisches Patentamt European Patent Office Office européen des brevets | **EUROPEAN SEARCH REPORT** | **Application Number** EP 25 20 8259 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Radio Access Network; NR; Physical layer procedures for data (Release 17)", 3GPP DRAFT; 38214-H10 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 6 April 2022 (2022-04-06), XP052152807, [retrieved on 2022-04-06] * the whole document * ----- | 1-16 | |
| | | | TECHNICAL FIELDS SEARCHED (IPC) |

The present search report has been drawn up for all claims

| Place of search | Date of completion of the search | Examiner |
|---|---|---|
| The Hague | 26 March 2026 | Beker, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 20 8259

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| US 2024064745 A1 | 22-02-2024 | CN 115918177 A | 04-04-2023 |
| | | EP 4132125 A1 | 08-02-2023 |
| | | EP 4633075 A2 | 15-10-2025 |
| | | JP 7430283 B2 | 09-02-2024 |
| | | JP 2023529749 A | 11-07-2023 |
| | | KR 20220148841 A | 07-11-2022 |
| | | US 2022225322 A1 | 14-07-2022 |
| | | US 2023046073 A1 | 16-02-2023 |
| | | US 2024064745 A1 | 22-02-2024 |
| | | WO 2022154583 A1 | 21-07-2022 |
| US 2023254091 A1 | 10-08-2023 | US 2023254091 A1 | 10-08-2023 |
| | | WO 2023150411 A1 | 10-08-2023 |

EPO FORM P0459

For more details about this annex : see Official Journal of the European Patent Office, No. 12/82